# EUROPÄISCHE PATENTSCHRIFT

(11) **EP 3 694 763 B1**
(45) Veröffentlichungstag und Bekanntmachung des Hinweises auf die Patenterteilung: **26.04.2023**
(21) Anmeldenummer: 18786248.7
(22) Anmeldetag: 05.10.2018
(51) Int. Cl.: B62D 1/185, F16D 3/06, F16C 3/035, F16C 33/20

(54) **VERFAHREN ZUR HERSTELLUNG VON BAUGRUPPEN MIT AXIAL VERSCHIEBBAREN WELLENTEILEN EINER LENKWELLE**
METHOD FOR PRODUCING ASSEMBLIES WITH AXIAL SHIFTABLE SHAFT PARTS OF A STEERING WHEEL
PROCÉDÉ DE FABRICATION D'ASSEMBLAGES AVEC DES PARTIES D'ARBRE À GLISSEMENT AXIAL D'UN VOLANT

(30) Priorität: 12.10.2017 DE 102017123769
(43) Veröffentlichungstag der Anmeldung: 19.08.2020
(73) Patentinhaber: thyssenkrupp Presta AG, 9492 Eschen (LI); thyssenkrupp AG, 45143 Essen (DE)
(72) Erfinder: HIRSCHAUER, Peter, 6805 Feldkirch (AT)
(74) Vertreter: thyssenkrupp Intellectual Property GmbH
(86) Internationale Anmeldenummer: PCT/EP2018/077094
(87) Internationale Veröffentlichungsnummer: WO 2019/072700

(56) Entgegenhaltungen:
- EP-A1- 2 787 089
- EP-A1- 3 691 874
- WO-A1-01/76931
- WO-A1-2009/090018
- US-A1- 2014 041 194

## Beschreibung

Die vorliegende Erfindung betrifft ein Verfahren mit den Merkmalen des Oberbegriffs des Anspruchs 1 und eine Kraftfahrzeuglenkung mit den Merkmalen des Oberbegriffs des Anspruchs 7.

Schiebeverbindungen für zueinander verschiebbare Wellenteile einer Lenkwelle, umfassend ein inneres Wellenteil und ein äußeres Wellenteil, sollen im Allgemeinen reibungsarm, spielfrei und mechanisch belastbar sein. Hier wird ein etwa kleeblattförmiger Querschnitt oder ein etwa runder Querschnitt mit einer Längsverzahnung, der zur Übertragung des Drehmoments geeignet ist, eingesetzt, so dass der innere Wellenteil und der äußere Wellenteil miteinander in Drehrichtung formschlüssig in Eingriff stehen. In beiden Fällen wird häufig eine Kunststoffhülse zwischen den beiden aus Metall gefertigten, zueinander verschiebbaren Bauelementen eingesetzt. Problematisch und aufwändig ist dabei bei der Fertigung dieser Verbindungen, dass das Kunststoffteil nicht unmittelbar als Bauteil eingesetzt werden kann und es ohne weitere Bearbeitungsschritte die Anforderungen an Spielfreiheit und definierte Reibung bei der axialen Verschiebebewegung nicht erfüllen kann.

In der DE 26 35 120 A1 wird eine Methode zur Herstellung einer Gleitverbindung einer Welle vorgestellt, bei der eine äußere Welle und eine innere Welle unter Zwischenschaltung einer Hülse vormontiert werden. Anschließend wird die äußere Welle nach innen verformt, und mit einer Schiebeoperation werden die Wellenteile zueinander kalibriert. Dabei erfolgt auch eine Erwärmung. Die Erwärmung kann mit einer Induktionsheizung, einer Gasflamme oder einer Berührungsheizung erfolgen, so dass der Kunststoff in eine plastische Fließbewegung gebracht wird. Als nachteilig stellen sich hierbei der erforderliche Zeitaufwand und die erforderliche thermische Energie zur Aufheizung der Wellenteile heraus. Auch das Endergebnis ist nicht in allen Fällen befriedigend, da die Wellenteile erwärmt werden und sich die Geometrie im Verbindungsbereich durch das Abkühlen der Wellenteile nach dem oben beschriebenen Vorgang wieder verändert.

In der US 9,452,444 B2 wird eine Methode zur Herstellung einer teleskopierbaren Welle vorgestellt, bei der die beiden Wellenteile, von denen eines der beiden Teile mit einem Kunststoff beschichtet ist, zunächst zusammengesetzt werden und dann eine Verschiebebewegung ausgelöst wird. Dabei wird die Verschiebekraft gemessen. Anschließend wird die Verschiebung solange fortgesetzt, bis eine gewünschte Verschiebekraft erreicht ist.

Die EP 2281731 B1 offenbart eine ähnliche Methode. Nachteilig sind hierbei die relativ hohen Kräfte, die zum Kalibrieren der Kunststoffschicht aufgewendet werden müssen. Auch die lange Prozessdauer der oszillierenden Verschiebebewegung und die aufwändigen apparativen Voraussetzungen sind nachteilig. Es ist deshalb Aufgabe der vorliegenden Erfindung, ein Verfahren bereitzustellen, mit dem die Prozesszeit verkürzt werden kann, ein geringerer Energieaufwand erforderlich ist und ein besseres Ergebnis erzielt werden kann. Diese Aufgabe wird von einem Verfahren mit den Merkmalen des Anspruchs 1 gelöst.

Die Aufgabe wird im Einzelnen gelöst, weil bei dem erfindungsgemäßen Verfahren zur Herstellung einer axial verschieblichen Verbindung zwischen zwei Wellenteilen, zwischen denen ein Kunststoff als Gleitmaterial angeordnet ist, folgende Merkmale vorgesehen sind:
a) Bereitstellen der beiden zu fügenden Wellenteile, wobei entweder wenigstens eines der beiden Wellenteile eine Kunststoffbeschichtung auf der dem anderen Bauteil zugewandten Oberfläche aufweist oder eine Kunststoffhülse zwischen den Wellenteilen vorgesehen ist,
b) Zusammenfügen der Wellenteile zu einer Baugruppe, gegebenenfalls mit der Kunststoffhülse, mittels einer Presskraft in Axialrichtung
c) Einspannen der Baugruppe in eine Vorrichtung, bei der die beiden Wellenteile gespannt und in Axialrichtung mit einer Verschiebkraft beaufschlagt werden können,
d) Anpressen einer Sonotrode von einer Seite an das jeweils äußere Bauteil und Abstützen des Bauteils an einem Gegenhalter,
e) Einleiten eines Ultraschallsignals mit einer Resonanzfrequenz eines der Wellenteile in die Sonotrode und Verschieben der Wellenteile in Axialrichtung hin und her, bis die Verschiebkraft oder die Verschiebegeschwindigkeit einen gewünschten Sollwert erreicht,
f) Beenden des Ultraschallsignals und Entnehmen der Baugruppe aus der Vorrichtung.

Dadurch wird eine schnellere und im Ergebnis präzisere Kalibrierung der Kunststoffhülse bzw. der Gleithülse bzw. der Kunststoffbeschichtung im Verschiebebereich der Wellenteile möglich.

Dies gilt insbesondere, weil das Ultraschallsignal eine Frequenz aufweist, die einer Resonanzfrequenz oder einer der Resonanzfrequenzen des mit der Sonotrode in Kontakt gebrachten Wellenteils oder des inneren Wellenteils entspricht. Dann ist der Energieübertrag von der Sonotrode auf den Kunststoff besonders effektiv.

Es kann vorgesehen sein, dass die Resonanzfrequenz vor dem Schritt a) in einer Simulation ermittelt wird, so dass diese Frequenz vorab als Parameter für die Ansteuerung der Sonotrode gespeichert werden kann.

Wenn im Schritt d) zwei Sonotroden an das äußere Bauteil angepresst werden, ist eine intensivere oder anders parametrierte Energieeinleitung möglich.

Insbesondere können die beiden Sonotroden mit Ultraschallsignalen verschiedener Frequenzen beaufschlagt werden, was vorteilhaft ist, wenn das Bauteil zwei oder mehr ausgeprägte Resonanzfrequenzen aufweist.

Darüberhinaus hat es sich gezeigt, dass auch mit Vorteil mehr als zwei Sonotroden eingesetzt werden können, um die Energieeinleitung noch weiter zu erhöhen. Dabei kann an jeder Sonotrode eine andere Frequenz oder ein anderer Frequenzverlauf über der Prozesszeit angewendet werden. Zur Darstellung des Verfahrens zur Herstellung der axial verschieblichen Verbindung kann die Verschiebung der beiden Wellenteile gegeneinander mit einem Pneumatikzylinder bewirkt werden. Durch den eingeleiteten Druck kann gut eine kraftgesteuerte Bewegung der eingespannten Baugruppe erfolgen. Dabei kann die Kraft auch für unterschiedliche Geschwindigkeiten der Bewegung gut eingestellt werden und die Verschiebegeschwindigkeit gemessen werden.

Bei einer Kraftfahrzeuglenkung mit einer teleskopierbaren Lenkwelle, die nach einem oben beschriebenen Verfahren hergestellt ist, ergeben sich in der Fertigung kürzere mögliche Taktzeiten und ein geringerer Energieaufwand. Außerdem ist im Ergebnis die Kraftfahrzeuglenkung mit besseren Eigenschaften hinsichtlich Dauerhaltbarkeit, Spielfreiheit und Geräuschfreiheit versehen.

Nachfolgend werden Ausführungsbeispiele der Erfindung anhand der Zeichnung beschrieben. Es zeigen:
- Figur 1:: eine schematisch dargestellte Kraftfahrzeuglenkung;
- Figur 2-4:: eine untere Lenkwelle;
- Figur 5-6:: die Lenkwelle aus Figur 2-4 in einem Querschnitt; sowie
- Figur 7:: die Lenkwelle aus Fig. 5-6 in einem Längsschnitt während der Kalibrierung der Kunststoffhülse.

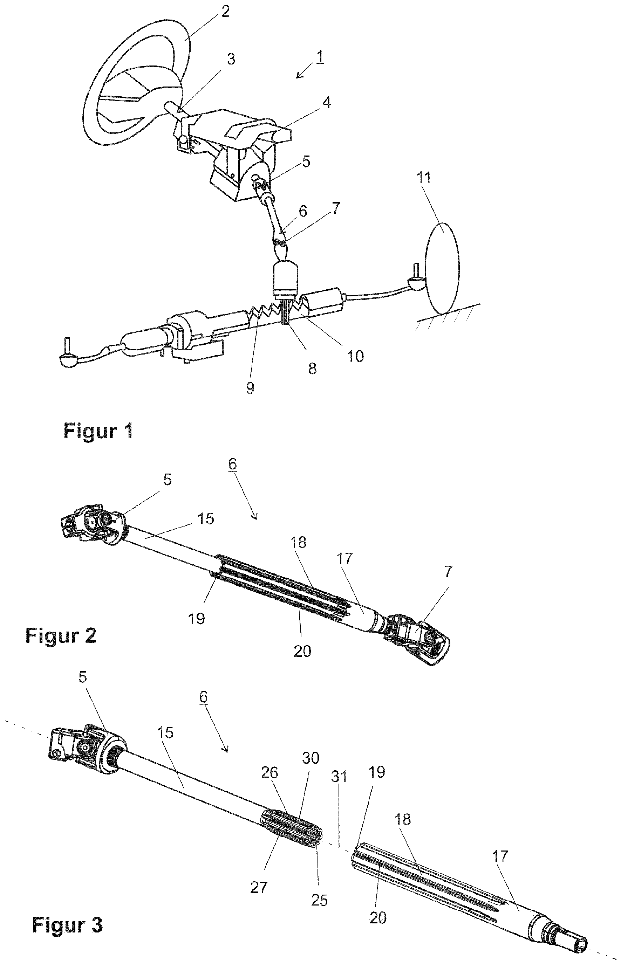

Die Figur 1 zeigt in einer schematischen Darstellung eine Kraftfahrzeuglenkung 1 mit einem Lenkrad 2, das drehfest mit einer oberen Lenkwelle 3 verbunden ist. Die obere Lenkwelle 3 ist in einer Konsole 4 höhenverstellbar und axialverstellbar gelagert. Über ein Kardangelenk 5 ist die obere Lenkwelle schwenkbar, aber drehfest mit einer unteren Lenkwelle 6 verbunden. Die untere Lenkwelle 6 ist schließlich über ein zweites Kardangelenk 7 mit einem Ritzel 8 verbunden, das in ein Zahnstangensegment 9 einer Zahnstange 10 eingreift.

Eine Drehbewegung des Lenkrads 2 führt somit zu einer Verschiebung der Zahnstange 10 und in bekannter Weise zu einer Verschwenkung von gelenkten Rädern 11 des Kraftfahrzeugs, wodurch eine Lenkbewegung und Fahrtrichtungsänderung bewirkt wird.

Die untere Lenkwelle 6 ist in Figur 2 detaillierter dargestellt. Gleiche oder funktionsgleiche Bauelemente tragen in den folgenden Figuren dieselben Bezugsziffern.

Die untere Lenkwelle 6 ist mit dem ersten Kardangelenk 5 und dem zweiten Kardangelenk 7 versehen. Das obere Kardangelenk 5 ist drehfest mit einem Welleninnenteil 15 verbunden, während das zweite Kardangelenk 7 mit einem Wellenaußenteil 17 drehfest verbunden ist. Das Wellenaußenteil 17 weist eine rotationssymmetrische umlaufende Struktur 18, die sich bis zu einem freien Ende 19 des äußeren Wellenteils 17 erstreckt. Die Struktur 18 besteht aus geraden Rillen 20, die von außen in das Wellenteil 17 eingeprägt sind. Die Rillen 20 verlaufen achsparallel und verleihen dem Wellenteil 17 im Querschnitt eine etwa sternförmige Struktur.

In der Figur 3 ist die untere Lenkwelle 6 aus den Figuren 1 und 2 in einer perspektivischen Ansicht dargestellt, in der das Welleninnenteil 15 und das Wellenaußenteil 17 auseinander gezogen sind. Hier ist erkennbar, dass das Welleninnenteil 15 an seinem freien Ende 25 einen Bereich 26 aufweist, der eine von einem kreisrunden Querschnitt abweichende Gestalt aufweist. Der Querschnitt dieses Bereichs 26 ist ebenfalls durch Rillen oder Nuten gekennzeichnet, die eine sternförmige Querschnittsgestalt ergeben, welche zu dem freien inneren Querschnitt des Wellenaußentals 17 passen. Dies wird weiter unten genauer beschrieben. In der Darstellung der Figur 3 trägt das Welleninnenteil 15 in dem Bereich 26 eine Kunststoffhülse 30, die in der Querschnittsgestalt dem Bereich 26 angepasst ist.

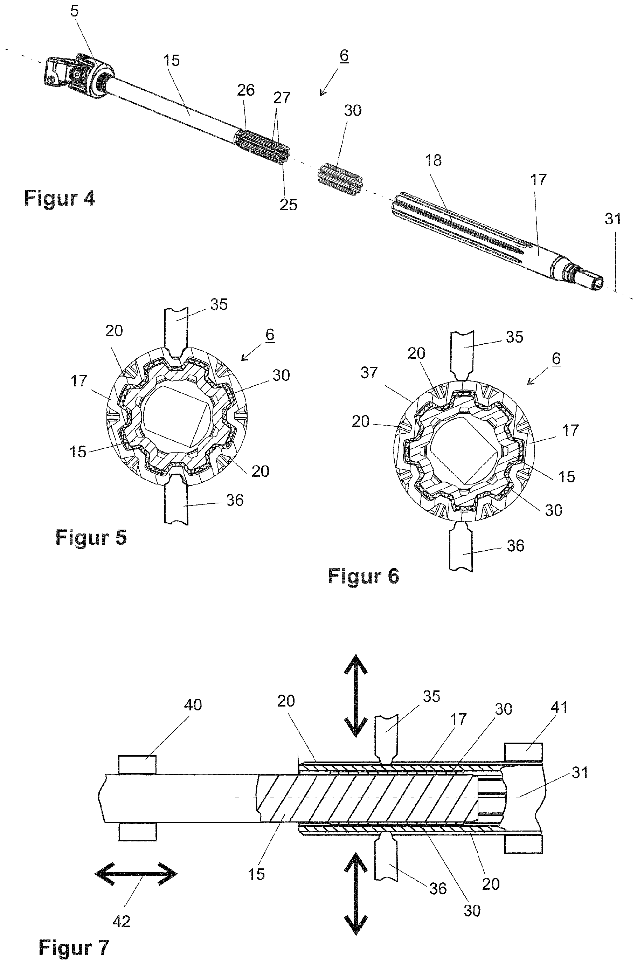

Dies wird in Figur 4 deutlicher. Die Figur 4 zeigt die untere Lenkwelle 6 in einer Darstellung entsprechend Figur 3, wobei jedoch Kunststoffhülse 30 von dem Bereich 26 des Welleninneneils 15 abgenommen ist. Die Längsachse und Symmetrieachse 31 stellt auch hier die Axialrichtung dar, in der die untere Lenkwelle 6 teleskopierbar ausgebildet ist.

Die Profilierung der unteren Lenkwelle 6 in den Bereichen, in denen das Welleninnenteil 15 und das Wellenaußenteil 17 überlappen und in denen die Kunststoffhülse 30 zwischen diesen beiden Wellenteilen angeordnet ist, ergibt bei geeigneter Ausführung eine drehfeste, aber in Richtung der Längsachse 31 teleskopierbare Verbindung. Im Falle der unteren Lenkwelle 6 ist eine solche teleskopierbare Verbindung vorteilhaft, da das Lenkgetriebe mit der Zahnstange 10 im Bereich der Vorderachse des Kraftfahrzeugs eingebaut ist, während die Lenksäule 1 etwa im Bereich des Armaturenträgers an der Karosserie befestigt ist. Relativbewegungen dieser Befestigungspunkte sind im Fahrbetrieb des Kraftfahrzeugs unvermeidbar. Diese Relativbewegungen werden durch die dargestellte Konstruktion der unteren Lenkwelle 6 aufgenommen. Dabei ist es für die Funktion und den Fahrkomfort wichtig, dass die Verbindung zwischen den beiden Wellenteilen dauerhaft spielfrei und dennoch reibungsarm funktioniert. Hierfür ist eine genaue Anpassung der Kunststoffhülse 30 an die beiden Profilierungen auf ihrer Innenseite und der Außenseite erforderlich. Das erfindungsgemäße Verfahren, das diese Anpassung in besonders vorteilhafter Weise ermöglicht, wird nachfolgend näher beschrieben.

Die Figur 5 zeigt die untere Lenkwelle 6 in einem Querschnitt in dem profilierten Bereich, schematisiert in einer Montagesituation. Das Welleninnenteil 15 und das Wellenaußenteil 17 sind in ihrem zusammen passenden, profilierten Bereich ineinander geschoben. Zwischen der inneren Oberfläche des Wellenaußenteils 17 und der äußeren Oberfläche des Welleninnenteils 15 befindet sich die Kunststoffhülse 30, die dort spielfrei sitzt. Um die Spielfreiheit zu gewährleisten, ist die Kunststoffhülse 30 mit einem Übermaß versehen, so dass der Sitz der beiden Wellenteile ineinander zunächst eine hohe Reibung aufweist. Im Betrieb würde sich diese hohe Reibung durch unerwünschte Kräfte und auch durch Geräuschentwicklung auf Grund des Stick-Slip-Effekts nachteilig bemerkbar machen. Zur Anpassung oder Kalibrierung der Kunststoffhülse 30 an die genauen Abmessungen der beiden Wellenteile ist während der Fertigung vorgesehen, eine Sonotrode 35 in einer Radialrichtung auf das Wellenaußenteil 17 aufzusetzen. Ein Amboss 36 wird auf der gegenüberliegenden Seite des Wellenaußenteils 17 angesetzt. Das Wellenaußenteil 17 wird dadurch fest zwischen der Sonotrode 35 und dem Amboss 36 eingespannt.

Die Figur 6 zeigt eine ähnliche Anordnung wie die Figur 5. In der Figur 6 ist abweichend von Figur 5 vorgesehen, dass die Sonotrode 35 und der Amboss 36 nicht in die Rillen 20 des Wellenaußenteils 17 eingesetzt werden, sondern auf zwischen den Rillen 20 ausgebildeten Außenflächen 37 aufgesetzt werden.

Die Figur 7 zeigt nun in einem Längsschnitt die Ausführung nach Figur 5, wobei wieder die Sonotrode 35 und der Amboss 36 in jeweils eine Rille 20 des Wellenaußenteils 17 eingesetzt sind. Das Welleninnenteil 15 ist in die Kunststoffhülse 30 und das Wellenaußenteil 17 eingesetzt. Beide Wellenteile werden nun von Spannzangen 40 und 41 erfasst. Die Sonotrode 35 wird angesteuert, um eine Ultraschallschwingung auf das äußere Wellenteil 17 zu übertragen. Das äußere Wellenteil 17 wird dadurch in eine mechanische Schwingung versetzt, und zwar mit einer Frequenz, die einer Resonanzfrequenz des Wellenaußenteils 17 nahe kommt. Dadurch wird die in die Sonotrode 35 eingeleitete Schwingungsenergie besonders effektiv auf das Wellenaußenteil 17 übertragen. Da das Wellenaußenteil 17 selbst relativ frei schwingt, wird die Schwingungsenergie zu einem großen Teil auf die Kunststoffhülse 30 übertragen, die dadurch mit hoher Frequenz verformt wird. Die Kunststoffhülse 30 erwärmt sich dabei. Gleichzeitig wird durch eine Relativbewegung in Richtung des Doppelpfeils 42 mittels der Spannzangen 40 und 41 der Welleninnenteil 15 in Axialrichtung hin- und herbewegt. Die erwärmte Kunststoffhülse 30 passt sich dabei den beiden einander zugewandten Oberflächen des Welleninnenteils 15 und des Wellenaußenteils 17 an. Der Anpassungsvorgang kann dadurch kontrolliert werden, dass die von den Spannzangen 40 und 41 aufzubringende Verschiebekraft bei der Hin- und Herbewegung gemessen wird. Vorzugsweise wird die Erhitzung der Kunststoffhülse 30 mittels Ultraschall ebenso wie die Bewegung in Richtung des Doppelpfeils 42 so lange ausgeführt, bis eine vorgesehene maximale Verschiebekraft unterschritten wird. Der Anpassungsvorgang ist dann abgeschlossen. Nach Abschalten der Anregung des Sonotrode 35 kühlt sich die Kunststoffhülse 30 schnell ab, da die beiden Wellenteile 15 und 17 durch die Ultraschallanregung im Wesentlichen nicht selbst erwärmt wurden und somit gegenüber der Kunststoffhülse 30 kalt sind. Dies fördert die Maßhaltigkeit der so kalibrierten Kunststoffhülse 30. Hinzu kommt, dass das Wellenaußenteil 17 und das Welleninnenteil 15 bei diesem Vorgang praktisch keine thermischen Änderungen ihrer Abmessungen erfahren. Im Gegensatz dazu wurde bei konventionellen Verfahren das Wellenaußenteil erhitzt und kühlte sich nach dem Kalibrierungsvorgang wieder ab, wodurch die erzielbare Präzision des Kalibriervorgangs der Kunststoffhülse 30 eingeschränkt ist.

Die Aufwärm- und Abkühlzeiten des beschriebenen Vorgangs sind auf Grund der geringen zu erwärmenden Masse der Kunststoffhülse 30 kurz, so dass eine kurze Taktzeit erzielbar ist. Weiters genügt es, die Kunststoffhülse nur an der Oberfläche soweit zu erwärmen, dass sie sich gut einformen kann.

Es ist jedoch noch anzumerken, dass eine derartig in ihrer Länge teleskopierbare Verbindung auch im Falle der oberen Lenkwelle 3 sinnvoll sein kann. Im Falle, dass das Lenkrad 2 verschiebbar zur Konsole 4 ist, werden auch für die obere Lenkwelle derartige teleskopierbare Verbindungen eingesetzt. Alle anhand der unteren Lenkwelle 6 dargestellten Varianten und Ausführungsformen sind in gleicher Weise auch für die obere Lenkwelle 3 anwendbar.

Der Ablauf der oben beschriebenen Vorgänge sieht also als Ausführungsbeispiel folgende teilweise optionale Prozessschritte vor:
- Bereitstellung der beiden zu fügenden Wellenteile, wobei
- entweder wenigstens eines der beiden Wellenteile eine Kunststoffbeschichtung auf der dem anderen Wellenteil zugewandten Oberfläche aufweist,
- oder eine Kunststoffhülse zur Anlage zwischen den Wellenteilen vorgesehen ist,
- Zusammenfügen der Wellenteile, gegebenenfalls mit der Kunststoffhülse dazwischen,
- wobei die Wellenteile und gegebenenfalls die Kunststoffhülse so ausgebildet sind, dass das Zusammenfügen nur unter Überwindung einer Presskraft erfolgen kann, da der Schiebesitz mit einem Übermaß ausgebildet ist,
- Einspannen der Baugruppe in eine Vorrichtung, bei der die beiden Wellenteile gespannt und in Axialrichtung mit einer Verschiebkraft beaufschlagt werden können. Die Vorrichtung ist vorzugsweise so ausgerüstet, dass eine Verschiebekraft gemessen werden kann.
- Anpressen einer Sonotrode von einer Seite an das jeweils äußere Wellenteil und Abstützen des Innenteils an einem Gegenhalter (Amboss),
- Einleiten eines Ultraschallsignals mit einer Resonanzfrequenz der Wellenteile in die Sonotrode und Verschieben der Wellenteile in Axialrichtung hin und her, bis die Verschiebkraft einen gewünschten Sollwert erreicht. Alternativ kann das Verfahren so ausgeführt werden, dass mit einer konstanten Kraft die Wellenteile gegeneinander verschoben werden und die Verschiebegeschwindigkeit gemessen wird. Dann wird der Vorgang beendet, wenn eine bestimmte Verschiebegeschwindigkeit erreicht wird.
- Nach Beendigung des Vorgangs wird die Welle als fertiges Bauteil aus der Vorrichtung entnommen und weiter verbaut.

## Patentansprüche

1. Verfahren zur Herstellung einer axial verschieblichen Verbindung zwischen zwei Wellenteilen einer Lenkwelle (3), umfassend ein inneres Wellenteil (15) und ein äußeres Wellenteil (17), zwischen denen ein Kunststoff als Gleitmaterial angeordnet ist, mit folgenden Merkmalen:
a) Bereitstellen der beiden zu fügenden Wellenteile (15,17), wobei entweder wenigstens eines der beiden Wellenteile (15,17) eine Kunststoffbeschichtung auf der dem anderen Wellenteil zugewandten Oberfläche aufweist oder eine Kunststoffhülse (30) zwischen den Wellenteil vorgesehen ist,
b) Zusammenfügen der Wellenteile (15,17) zu einer Baugruppe, gegebenenfalls mit der Kunststoffhülse (30), mittels einer Presskraft in Axialrichtung
c) Einspannen der Baugruppe in eine Vorrichtung, bei der die beiden Wellenteile (15,17) gespannt und in Axialrichtung mit einer Verschiebkraft beaufschlagt werden können,
d) Anpressen einer Sonotrode (35) von einer Seite an das jeweils äußere Bauteil und Abstützen des Bauteils an einem Gegenhalter,
e) Einleiten eines Ultraschallsignals mit einer Resonanzfrequenz eines der Wellenteile (15,17) in die Sonotrode (35) und Verschieben der Wellenteile (15,17) in Axialrichtung hin und her, bis die Verschiebkraft oder die Verschiebegeschwindigkeit einen gewünschten Sollwert erreicht,
f) Beenden des Ultraschallsignals und Entnehmen der Baugruppe aus der Vorrichtung.

2. Verfahren nach Anspruch 1, **dadurch gekennzeichnet, dass** das Ultraschallsignal eine Frequenz aufweist, die einer Resonanzfrequenz des mit der Sonotrode i (35) in Kontakt gebrachten äusseren Wellenteils (17) entspricht.

3. Verfahren nach Anspruch 1, **dadurch gekennzeichnet, dass** das Ultraschallsignal eine Frequenz aufweist, die einer Resonanzfrequenz des inneren Wellenteils (15) entspricht.

4. Verfahren nach Anspruch einem der vorhergehenden Ansprüche, **dadurch gekennzeichnet, dass** die Resonanzfrequenz vor dem Schritt a) in einer Simulation ermittelt wird.

5. Verfahren nach einem der vorhergehenden Ansprüche, **dadurch gekennzeichnet, dass** im Schritt d) zwei Sonotroden an das äußere Bauteil angepresst werden.

6. Verfahren nach Anspruch 5, **dadurch gekennzeichnet, dass** die beiden Sonotroden mit Ultraschallsignalen verschiedener Resonanzfrequenzen beaufschlagt werden.

## Claims

1. Method for producing an axially displaceable connection between two shaft parts of a steering column (3), comprising an inner shaft part (15) and an outer shaft part (17), between which a plastic is arranged as a sliding material, having the following features:
a) providing the two shaft parts (15, 17) to be joined, wherein either at least one of the two shaft parts (15, 17) has a plastic coating on the surface facing the other shaft part, or a plastic sleeve (30) is provided between the shaft parts,
b) joining the shaft parts (15, 17) together to form an assembly, if appropriate with the plastic sleeve (30), by means of a pressing force in the axial direction,
c) clamping the assembly in a device in which the two shaft parts (15, 17) can be clamped and a displacement force can be applied thereto in the axial direction,
d) pressing a sonotrode (35) onto the respective outer component from one side and supporting the component on a counter-holder,
e) introducing an ultrasonic signal having a resonant frequency of one of the shaft parts (15, 17) into the sonotrode (35) and displacing the shaft parts (15, 17) to and fro in the axial direction until the displacement force or the displacement speed reaches a desired target value,
f) stopping the ultrasonic signal and removing the assembly from the device.

2. Method according to Claim 1, **characterized in that** the ultrasonic signal has a frequency which corresponds to a resonant frequency of the outer shaft part (17) brought into contact with the sonotrode (35).

3. Method according to Claim 1, **characterized in that** the ultrasonic signal has a frequency which corresponds to a resonant frequency of the inner shaft part (15).

4. Method according to one of the preceding claims, **characterized in that** the resonant frequency is determined in a simulation before step a).

5. Method according to one of the preceding claims, **characterized in that** in step d) two sonotrodes are pressed onto the outer component.

6. Method according to Claim 5, **characterized in that** ultrasonic signals of different resonant frequencies are applied to the two sonotrodes.

## Revendications

1. Procédé de réalisation d'une liaison mobile axialement entre deux parties d'arbre d'un arbre de direction (3), comprenant une partie d'arbre intérieure (15) et une partie d'arbre extérieure (17), entre lesquelles est disposée une matière synthétique servant de matériau de glissement, ledit procédé présentant les caractéristiques suivantes :
a) fournir les deux parties d'arbre (15, 17) à assembler, soit l'une au moins des deux parties d'arbre (15, 17) comportant un revêtement de matière synthétique sur la surface dirigée vers l'autre partie d'arbre, soit un manchon de matière synthétique (30) étant prévu entre les parties d'arbre,
b) assembler les parties d'arbre (15, 17) pour former un ensemble, éventuellement avec le manchon en matière synthétique (30), au moyen d'une force de pression dans la direction axiale,
c) serrer l'ensemble dans un dispositif dans lequel les deux parties d'arbre (15, 17) peuvent être serrées et soumises à une force de déplacement dans la direction axiale,
d) presser une sonotrode (35) d'un côté sur le composant extérieur respectif et amener le composant en appui sur un contre-support,
e) injecter un signal ultrasonore ayant une fréquence de résonance de l'une des parties d'arbre (15, 17) dans la sonotrode (35) et déplacer les parties d'arbre (15, 17) suivant un mouvement alternatif dans la direction axiale jusqu'à ce que la force de déplacement ou la vitesse de déplacement atteigne une valeur cible souhaitée,
f) mettre fin au signal ultrasonore et retirer l'ensemble du dispositif.

2. Procédé selon la revendication 1, **caractérisé en ce que** le signal ultrasonore a une fréquence qui correspond à une fréquence de résonance de la partie d'arbre extérieure (17) amenée en contact avec la sonotrode (35).

3. Procédé selon la revendication 1, **caractérisé en ce que** le signal ultrasonore a une fréquence qui correspond à une fréquence de résonance de la partie d'arbre intérieure (15).

4. Procédé selon la revendication l'une des revendications précédentes, **caractérisé en ce que** la fréquence de résonance est déterminée avant l'étape a) dans une simulation.

5. Procédé selon l'une des revendications précédentes, **caractérisé en ce que**, à l'étape d), deux sonotrodes sont pressées sur le composant extérieur.

6. Procédé selon la revendication 5, **caractérisé en ce que** les deux sonotrodes sont soumises à des signaux ultrasonores de fréquences de résonance différentes.
